# EUROPÄISCHE PATENTANMELDUNG

(11) **EP 1 394 881 A2**
(43) Veröffentlichungstag der Anmeldung: **03.03.2004**
(21) Anmeldenummer: 03016949.4
(22) Anmeldetag: 25.07.2003
(51) Int. Cl.: H01M 8/04, H01M 8/06

(54) **Betriebsmedium-Kühlsystem, insbesondere eines Brennstoffzellen-Reformersystems**

(30) Priorität: 16.08.2002 DE 10237450
(71) Anmelder: Volkswagen Aktiengesellschaft, 38436 Wolfsburg (DE)
(72) Erfinder: Mayer, Jörg, Dr. rer. nat., 76703 Kraichtal (DE); Kahlich, Michael, Dr., 38550 Isenbüttel (DE)

(57) **Zusammenfassung**

Das Betriebsmedium-Kühlsystem (12) ist insbesondere Teil eines Brennstoffzellen-Reformersystems (10) eines Kraftfahrzeugs. Hierbei ist vorgesehen, dass das Betriebsmedium-Kühlsystem (12) ein einstellbares Betriebsmediumverteilerelement (30) enthält zur Trennung eines zu kühlenden Betriebsmediumstroms (20,28) in mindestens zwei Betriebsmediumteilströme (32,36), wobei das Betriebsmediumverteilerelement (30) mindestens mit einer von einem zugehörigen Betriebsmediumteilstrom (32) durchsetzbaren Kühleinheit (34) des Betriebsmedium-Kühlsystems (12) verbunden ist.

## Beschreibung

Die Erfindung betrifft ein Betriebsmedium-Kühlsystem, insbesondere eines Brennstoffzellen-Reformersystems eines Kraftfahrzeugs, gemäß Oberbegriff des Anspruchs 1.

Kühlsysteme der eingangs genannten Art sind bekannt. Sie dienen beispielsweise zur Kraftstoffreformierung beziehungsweise zur Reformierung von Kohlenwasserstoffen (Betriebsmedium) und sind insbesondere als Wärmetauschersystem ausgebildet. Mittels eines Wärmetauschersystems ist es in verhältnismäßig einfacher Weise möglich, im Rahmen einer Betriebsmedium-Kühlung die abgegebene Wärme innerhalb eines Reformierungsprozesses integrativ zu nutzen. Das Betriebsmedium (beispielsweise ein Reaktionsgas) soll dabei mittels des Kühlsystems auf eine praktisch konstante Betriebstemperatur abgekühlt werden. Eine derartige Betriebsmedium-Kühlung ist beispielsweise zwischen einem Hochtemperatur-Shift und einem Niedertemperatur-Shift eines Brennstoffzellen-Reformersystems mittels eines Kühlsystems erforderlich.

Die bekannten Kühlsysteme weisen den Nachteil auf, dass die einstellbaren Temperaturen des Betriebsmediums verhältnismäßig stark mit den auftretenden Betriebslastwechseln beispielsweise eines entsprechenden Reformersystems variieren und somit eine präzise Betriebsmedium-Temperatureinstellung auf eine vorgebbare Solltemperatur (Zieltemperatur) in den bekannten Kühlsystemen nicht möglich ist. Zur Einstellung einer insbesondere konstanten Betriebstemperatur des Betriebsmediums mittels des bekannten Kühlsystems (Wärmetauscher) ist es notwendig, den Massenstrom des Wärmetauscher-Kühlmediums und/oder die Zusammensetzung des Kühlmediums selbst an die auftretenden Betriebslastwechsel des Reformersystems anzupassen. Eine derartige lastabhängige Anpassung des Kühlmediummassenstroms hängt von der Wärmekapazität eines jeweiligen Kühlmediums ab und ist steuerungstechnisch relativ aufwendig.

Es ist Aufgabe der Erfindung, ein Betriebsmedium-Kühlsystem der eingangs genannten Art vorzuschlagen, das auf verhältnismäßig einfache Weise eine lastangepasste und präzise Kühlung des Betriebsmediums auf eine insbesondere vorgebbare und konstante Temperatur erlaubt.

Die Aufgabe wird gelöst durch ein Betriebsmedium-Kühlsystem mit den Merkmalen des Anspruchs 1. Das Betriebsmedium-Kühlsystem ist erfindungsgemäß dadurch gekennzeichnet, dass es ein einstellbares Betriebsmediumverteilerelement enthält zur Trennung eines zu kühlenden Betriebsmediumstroms in mindestens zwei Betriebsmediumteilströme, wobei das Betriebsmediumverteilerelement mindestens mit einer von einem zugehörigen Betriebsmediumteilstrom durchsetzbaren Kühleinheit des Betriebsmedium-Kühlsystems verbunden ist. Mittels des Betriebsmediumverteilerelements lässt sich in verhältnismäßig einfacher Weise in Abhängigkeit der auftretenden Betriebslastwechsel des Kühlsystems der Betriebsmediumstrom in zwei voneinander unabhängige Betriebsmediumteilströme trennen, wobei der Massenstrom eines jeweiligen, eine zugehörige Kühleinheit durchsetzenden Betriebsmediumteilstroms mittels des Betriebsmediumverteilerelements variierbar ist und somit auch die Kühlwirkung einer jeweiligen Kühleinheit mittels einer Betriebsmediummassenstromänderung veränderbar ist. Im Gegensatz hierzu erfolgt im Stand der Technik zu diesem Zweck eine Kühlmediummassenstromänderung, welche dagegen bei Einsatz des erfindungsgemäßen Kühlsystems diesbezüglich nicht notwendig ist. Dabei können die Betriebsmediumteilströme mittels einer jeweiligen, zugehörigen Kühleinheit (beispielsweise Wärmetauscher) mit gleichartigen oder unterschiedlichen Kühlmedien auf jeweils vorgebbare Betriebstemperaturen gekühlt werden. Ferner ist denkbar, lediglich einen von zwei Betriebsmediumteilströmen mittels einer Kühleinheit (Wärmetauscher) zu kühlen, wobei der jeweilige Massenstrom des zu kühlenden und des nicht zu kühlenden Betriebsmediumteilstroms mittels des Betriebsmediumverteilerelements frei einstellbar ist. Gegebenenfalls kann mittels des Betriebsmediumverteilerelements auch der Gesamtmassenstrom des Betriebsmediumstroms variiert werden, beispielsweise unter Einsatz eines mit dem Betriebsmediumverteilerelement verbundenen Betriebsmediumzwischenspeichers.

Mit Vorteil ist stromabseitig der Kühleinheit eine Betriebsmediumteilstrom-Mischeinheit angeordnet zur Mischung der Betriebsmediumteilströme zu einem gekühlten Betriebsmediumstrom. Die Betriebsmediumteilstrom-Mischeinheit dient somit zur Zusammenführung der mittels des Betriebsmediumverteilerelements erzeugten Betriebsmediumteilströme unter Ausbildung eines gekühlten Betriebsmediumstroms. Gegebenenfalls kann auch die Betriebsmediumteilstrom-Mischeinheit vorzugsweise automatisiert einstellbar sein und insbesondere bei Einsatz eines jeweiligen Betriebsmediumteilstrom-Zwischenspeichers zur zusätzlichen Massenstromeinstellung herangezogen werden. Da die unterschiedlichen Betriebsmediumteilstrom-Massenströme unterschiedliche Temperaturen aufweisen, lassen sich mittels Einstellung der jeweiligen Massenströme in der Betriebsmediumteilstrom-Mischeinheit auch die Betriebstemperaturen des Betriebsmediumstroms an der Austrittsseite der Betriebsmediumteilstrom-Mischeinheit auf verhältnismäßig einfache Weise einstellen.
Vorzugsweise ist das Betriebsmediumverteilerelement an seiner Austrittsseite, unter Ausbildung einer Parallelanordnung, mit der Kühleinheit und mit der Betriebsmediumteilstrom-Mischeinheit verbunden. Bei diesem Ausführungsbeispiel wird somit lediglich ein Betriebsmediumteilstrom mittels der Kühleinheit auf eine vorgebbare Temperatur gekühlt, während der zweite Betriebsmediumteilstrom keine Kühlung erfährt, sondern direkt zu der Betriebsmediumteilstrom-Mischeinheit geleitet wird, mittels welcher er mit dem gekühlten Betriebsmediumteilstrom zusammengeführt wird unter Ausbildung des auf eine vorzugsweise konstante und vorgebbare Temperatur gekühlten Betriebsmediumstroms.

Vorteilhafterweise ist das Betriebsmediumverteilerelement an seiner Eintrittsseite mit einer vom Betriebsmediumstrom durchsetzbaren Vorkühleinheit verbunden. Mittels der Vorkühleinheit wird der Gesamtmassenstrom des Betriebsmediums auf eine vorzugsweise vorgebbare Temperatur vorgekühlt, so dass eine an die Betriebslastwechsel des Kühlsystems (beziehungsweise des Reformersystems) angepasste Kühlung des Betriebsmediums oder mindestens eines Betriebsmediumteilstroms mittels der von selbigem durchsetzten Kühleinheit erfolgt. Der Einsatz von zwei voneinander unabhängigen Kühlaggregaten (Vorkühleinheit, Kühleinheit) erlaubt eine besonders flexibel anpassbare Kühlung des Betriebsmediums auf eine insbesondere vorgebbare und konstante Betriebstemperatur. Dabei können die Kühlmedien der Vorkühleinheit und der Kühleinheit der Betriebsmedium-Kühleinrichtung voneinander unterschiedlicher Art sein (zum Beispiel in Form eines Kühlgases, einer Kühlflüssigkeit oder eines entsprechenden Gemischs).

Gemäß einer bevorzugten Ausführungsform ist das Kühlsystem als Wärmetauschereinrichtung ausgebildet und sind die Kühleinheit und gegebenenfalls die Vorkühleinheit jeweils ein Wärmetauscher. Als Wärmetauscher ausgebildete Kühleinheiten eignen sich besonders zu einer effektiven und steuerungstechnisch verhältnismäßig einfach handhabbaren beziehungsweise kontrollierbaren Betriebsmediumkühlung im Kühlsystem. Dabei können die Wärmetauscher als Gleichstromwärmetauscher, Gegenstromwärmetauscher und/oder als Kreuzstromwärmetauscher ausgebildet sein.

Mit Vorteil ist die Vorkühleinheit mit einem Kühlluftstrom und die Kühleinheit mit einem Kühlflüssigkeitsstrom, insbesondere einem Kühlwasserstrom, durchsetzbar. Die Auswahl an Kühlmedien für die Kühleinheit und für die Vorkühleinheit hängt insbesondere von der einzustellenden Soll-Betriebstemperatur des Betriebsmediums ab. Alternativ können auch Gas- und/oder Flüssigkeits-Gemische als Kühlmedien zum Einsatz kommen.

Vorzugsweise ist das Kühlleitungssystem der Kühleinheit und/oder der Vorkühleinheit mit mindestens einer weiteren Funktionseinheit insbesondere des Brennstoffzellensystems verbunden. Hierdurch wird beispielsweise die Nutzung eines in der Kühleinheit und/oder in der Vorkühleinheit erwärmten, jeweiligen Kühlmediums zur Vorwärmung eines Eduktstroms beispielsweise im Brennstoffzellensystem ermöglicht. Es kann somit ein im Brennstoffzellensystem integrierter und betriebsgünstiger Wärmefluss realisiert werden.

Entsprechend einer bevorzugten Ausführungsform ist die Kühleinheit an ihrer Austrittsseite mit der Betriebsmediumteilstrom-Mischeinheit verbunden insbesondere unter Zwischenschaltung eines Kondensatabscheiders. Der Kondensatabscheider dient zum Auskondensieren beispielsweise von flüssigem Wasser aus dem gekühlten Betriebsmediumteilstrom insbesondere beim Anfahren des noch kalten Kühlsystems.

Das Betriebsmedium kann beispielsweise ein Reformatgas sein, das von einem Hochtemperatur-Shift zu einem Niedertemperatur-Shift unter Zwischenschaltung des Betriebsmedium-Kühlsystems. führbar ist. Das Kühlsystem kann zusätzlich oder alternativ auch zur Lösung anderer, entsprechender Kühlaufgaben beispielsweise innerhalb des Brennstoffzellensystems zur Anwendung kommen unter Erzielung der vorgenannten Vorteile.

Mit Vorteil ist ein Regelungssystem vorgesehen zur Steuerung des Betriebsmediumverteilerelements in Abhängigkeit einer Soll-Ist-Temperaturdifferenz des gekühlten Betriebsmediumstroms. Ein derartiges Regelungssystem erlaubt eine schnelle und zuverlässige Betriebsmediumunterteilung in mehrere Betriebsmediumteilströme zur Erzielung einer flexiblen Betriebsmediumkühlung.

Weitere vorteilhafte Ausgestaltungen der Erfindung ergeben sich aus der Beschreibung.

Die Erfindung wird nachfolgend in einem Ausführungsbeispiel anhand einer zugehörigen Zeichnung näher erläutert.

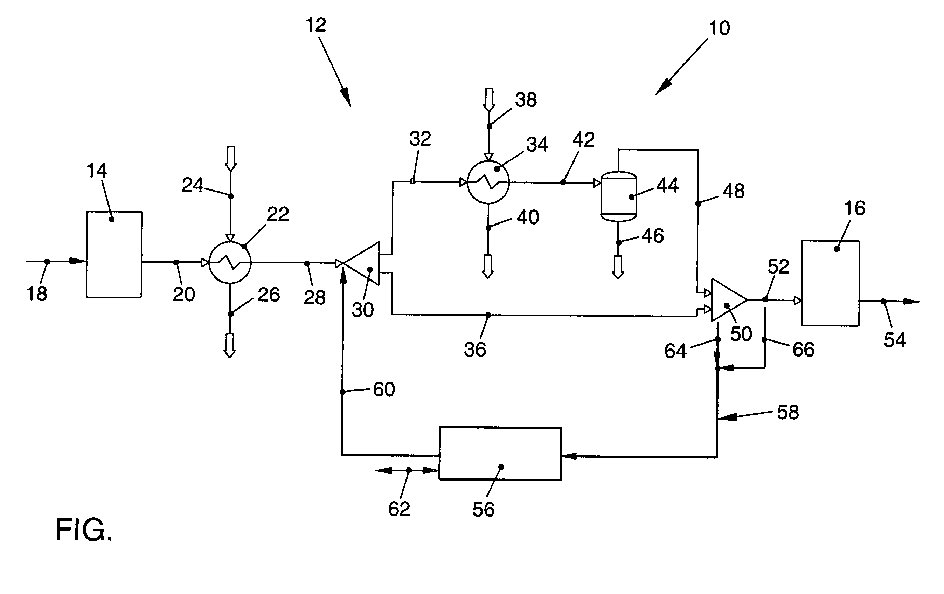

Die einzige Figur zeigt ein Fließschema zur Darstellung eines erfindungsgemäßen Betriebsmedium-Kühlsystems, das Teil eines Brennstoffzellen-Reformersystems ist. Die Figur zeigt anhand eines Fließschemas ein allgemein mit 10 bezeichnetes Brennstoffzellen-Reformersystem, das einen Hochtemperatur-Shift 14 und einen Niedertemperatur-Shift 16 unter Zwischenschaltung eines erfindungsgemäßen Betriebsmedium-Kühsystems 12 aufweist. Der Hochtemperatur-Shift 14 wird gemäß Pfeil 18 mit einem Betriebsmedium beaufschlagt und ist an seinem Austritt mit einem Wärmetauscher 22 (Vorkühleinheit) verbunden zur Beaufschlagung desselben gemäß Pfeil 20 mit einem Betriebsmediumstrom. Der Betriebsmediumstrom (Pfeil 20) wird in der Vorkühleinheit 22 mittels eines Kühlmediums (Kühlluftstrom) gemäß Pfeil 24 vorgekühlt. Der hierdurch erwärmte Kühlluftstrom wird gemäß Pfeil 26 vorzugsweise einer weiteren Funktionseinheit (nicht in der Figur dargestellt) des Brennstoffzellensystems zugeführt, um eine zusätzliche Wärmenutzung des Kühlluftstroms (Pfeil 26) innerhalb des Brennstoffzellensystems zu ermöglichen. Der vorgekühlte Betriebsmediumstrom wird anschließend gemäß Pfeil 28 einem Betriebsmediumverteilerelement 30 zugeführt, das zur Teilung des Betriebsmediumstroms (Pfeil 28) in zwei voneinander getrennte Betriebsmediumteilströme gemäß den Pfeilen 32, 36 dient. Dabei können die Betriebsmediumteilströme 32, 36 unterschiedlich große Massenströme aufweisen. Einer der Betriebsmediumteilströme wird ohne eine weitere Kühlbehandlung gemäß Pfeil 36 vom Betriebsmediumverteilerelement 30 zu einer Betriebsmediumteilstrom-Mischeinheit 50 geführt, während der zweite Betriebsmediumteilstrom 32 zu einem weiteren Wärmetauscher 34 (Kühleinheit) geleitet wird. Die Kühleinheit 34 dient zur in Bezug auf Betriebslastwechsel des Brennstoffzellen-Reformersystems 10 angepassten Kühlung des selbigen durchsetzenden Betriebsmediumteilstroms 32, wobei zur Kühlung ein Kühlmedium 38 in Form eines Kühlflüssigkeitsstroms, insbesondere eines Kühlwasserstroms, genutzt wird. Der in der Kühleinheit 34 erwärmte Kühlflüssigkeitsstrom (Pfeil 40) wird ebenfalls zur weiteren Wärmenutzung einer nicht in der Figur dargestellten Funktionseinheit des Brennstoffzellensystems zugeführt. Der auf eine vorgebbare Betriebstemperatur gekühlte Betriebsmediumteilstrom wird von der Kühleinheit 34 gemäß Pfeil 42 einem Kondensatabscheider 44 zugeführt, mittels welchem gegebenenfalls anfallendes Kondensat gemäß Pfeil 46 aus dem Betriebsmediumteilstrom (Pfeil 42) abgeführt wird. Der verbleibende Betriebsmediumteilstrom wird stromabseitig des Kondensatabscheiders 44 gemäß Pfeil 48 der Betriebsmediumteilstrom-Mischeinheit 50 zugeführt, mittels welchem eine Vermischung der zwei stromabseitig des Betriebsmediumverteilerelements 30 gebildeten Betriebsmediumteilströme (Pfeile 48, 36) erfolgt unter Ausbildung eines auf eine Soll-Betriebstemperatur gekühlten Betriebsmediumstroms (Pfeil 52). Der gekühlte Betriebsmediumstrom 52 wird dem Niedertemperatur-Shift 16 zugeführt, von welchem ein Betriebsmedium gemäß Pfeil 54 zu einer weiteren Funktionseinheit des Brennstoffzellensystems geleitet werden kann. Ferner ist ein Regelungssystem 56 vorgesehen, das mit der Betriebsmediumteilstrom-Mischeinheit 50 verbunden ist (Pfeilsystem 58) zur Übertragung von Massenstrombetriebsdaten (Pfeil 64) und/oder von Betriebstemperatur-Istdaten (Pfeil 66) an das Regelungssystem 56. Diese Daten werden ausgewertet zur Steuerung des Betriebsmediumverteilerelements 30 in Abhängigkeit einer Soll-lst-Temperaturdifferenz des gekühlten Betriebsmediumstroms (Pfeil 52). Hierzu ist das Regelungssystem 56 mittels einer Steuerungsleitung (Pfeil 60) operativ mit dem einstellbaren Betriebsmediumverteilerelement 30 wirkverbunden. Das Regelungssystem 56 kann gemäß Doppelpfeil 62 gegebenenfalls auch mit weiteren Funktionseinheiten des Brennstoffzellensystems oder des Kraftfahrzeugs in Verbindung stehen.

Das Brennstoffzellen-Reformersystem 10 erlaubt eine effiziente Reformierung von Kohlenwasserstoffen für Brennstoffzellenanwendungen, da die in den Wärmetauschern 22, 34 freigesetzte Wärme mittels eines entsprechenden Kühlmediumstroms (Pfeile 26, 40) beispielsweise zur weiteren Eduktvorwärmung innerhalb des Brennstoffzellensystems genutzt werden kann. Eine derartig sinnvolle Nutzung von Betriebsmediumabwärme ist insbesondere bei verhältnismäßig hohen Temperaturen, zum Beispiel größer 400°C, effektiv und somit vorteilhaft. Dabei sind im Rahmen eines Reformierungsprozesses für die einzelnen Prozessstufen relativ enge Betriebstemperaturbereiche des Betriebsmediums einzuhalten, so dass dementsprechend auch eine präzise und effektive Abwärmenutzung im Brennstoffzellensystem planbar möglich ist.

Die Wärmetauscher 22, 34 können beispielsweise als Gleichstrom-, Gegenstromund/oder Kreuzstrom-Wärmetauscher ausgebildet sein. Dabei kann im Wärmetauscher 22 (Vorkühleinheit) mit Feuchtigkeit gesättigte Luft als Kühlmedium zum Einsatz kommen. Der verfügbare Massenstrom an Luft (Pfeil 24) als Kühlmedium ist jedoch nicht ausreichend, um eine vorgebbare und konstante Zieltemperatur (Soll-Temperatur) des Betriebsmediumstroms (Pfeil 28) zu erreichen. Aufgrund des verhältnismäßig kleinen Kühlmedium-Massenstroms (Pfeil 24) wird eine relativ hohe Temperatur des Kühlmediumstroms (Pfeil 26) am Austritt des Wärmetauschers 22 erzielt. Dies kann zur Erzielung einer Wirkungsgradverbesserung des Brennstoffzellen-Reformersystems 10 genutzt werden, indem der erwärmte Kühlmediumstrom (Pfeil 26) als Edukt zur Reformierung weiterverwendet wird. Für den Fall, dass der Betriebsmediumstrom beziehungsweise das Reformat (Pfeil 28) noch nicht das zum Eintritt in den Niedertemperatur-Shift 16 notwendige Temperaturniveau aufweist, erfolgt mittels des Betriebsmediumverteilerelements 30 eine Aufteilung des Betriebsmediumstroms (Pfeil 28) in zwei voneinander getrennte Betriebsmediumteilströme (Pfeile 32, 36). In dem zur Kühlung eines der Betriebsmediumteilströme (Pfeil 32) vorgesehenen Wärmetauschers 34 wird ein flüssiges Kühlmedium (Pfeil 38) eingesetzt, dessen Vorlauftemperatur (beispielsweise 100°C bis 200°C) ausreichend groß ist, um bei den im Standardbetrieb des Brennstoffzellen-Reformersystems 10 vorherrschenden Betriebsdrücken eine Auskondensation von Wasser im gekühlten Betriebsmediumteilstrom (Pfeil 42) zu vermeiden. Sollte allerdings beim Anfahren des "kalten" Brennstoffzellen-Reformersystems 10 beziehungsweise der entsprechenden Anlage dennoch Wasser aus dem Betriebsmediumteilstrom (Pfeil 42) auskondensieren, so wird dieses Wasser mittels des Kondensatabscheiders 44 aus dem Betriebsmediumteilstrom (Pfeil 42) entfernt. Der Wärmetauscher 34 ist derart dimensioniert, dass der Betriebsmediumstrom (Pfeil 28) auch bei auftretenden Betriebslastwechseln des Brennstoffzellen-Reformersystems 10 nahezu auf die Temperatur des Kühlmediums (Pfeil 38) abgekühlt wird. Die für den Betrieb des Niedertemperatur-Shifts 16 erforderliche Zieltemperatur (Soll-Temperatur) des Betriebsmediumstroms (Pfeil 52) wird nach Mischen der Betriebsmediumteilströme (Pfeile 48, 36) mittels der Betriebsmediumteilstrom-Mischeinheit 50 erhalten. Hierbei erfolgt eine Mischung des gekühlten Betriebsmediumteilstroms (Pfeil 48) mit dem noch relativ heißen Betriebsmediumteilstrom (Pfeil 36). Das Regelungssystem 56 erlaubt eine Steuerung der Aufteilung des Betriebsmediumstroms (Pfeil 28) mittels des Betriebsmediumverteilerelements 30 in zwei Betriebsmediumteilströme (Pfeile 32, 36) in Abhängigkeit der Ist-Temperatur beziehungsweise der Soll-lst-Temperaturdifferenz des gekühlten Betriebsmediumstroms (Pfeil 52). Als Betriebsmediumverteilerelement 30 können beispielsweise Drosselklappen oder Proportionalventile eingesetzt werden.

Mittels des Betriebsmediumkühlsystems 12 wird eine an gegebenenfalls auftretende Betriebslastwechsel des Brennstoffzellen-Reformersystems 10 angepasste Kühlung des Betriebsmediumstroms (Pfeil 20) auf eine konstante Temperatur (Pfeil 52) möglich. Dabei kann die Temperatureinstellung regelungstechnisch verhältnismäßig einfach mittels temperaturgesteuerter Einstellung einer Drosselklappe und/oder eines Proportionalventils (Betriebsmediumverteilerelement 30) erfolgen. Gleichzeitig ist es möglich, den Gesamtwirkungsgrad des Brennstoffzellen-Reformersystems 10 beziehungsweise des Brennstoffzellensystems durch zusätzliche Nutzung der gewonnenen Abwärme zur Eduktvorwärmung zu verbessern unter Ausbildung eines möglichst geschlossenen Wärmekreises.

## Patentansprüche

1. Betriebsmedium-Kühlsystem, insbesondere eines Brennstoffzellen-Reformersystems eines Kraftfahrzeugs, **dadurch gekennzeichnet, dass** es ein einstellbares Betriebsmediumverteilerelement (30) enthält zur Trennung eines zu kühlenden Betriebsmediumstroms (20,28) in mindestens zwei Betriebsmediumteilströme (32,36), wobei das Betriebsmediumverteilerelement (30) mindestens mit einer von einem zugehörigen Betriebsmediumteilstrom (32) durchsetzbaren Kühleinheit (34) des Betriebsmedium-Kühlsystems (12) verbunden ist.

2. Kühlsystem nach Anspruch 1, **dadurch gekennzeichnet, dass** stromabseitig der Kühleinheit (34) eine Betriebsmediumteilstrom-Mischeinheit (50) angeordnet ist zur Mischung der Betriebsmediumteilströme (48,36) zu einem gekühlten Betriebsmediumstrom (52).

3. Kühlsystem nach einem der vorhergehenden Ansprüche, **dadurch gekennzeichnet, dass** das Betriebsmediumverteilerelement (30) an seiner Austrittsseite, unter Ausbildung einer Parallelanordnung, mit der Kühleinheit (34) und mit der Betriebsmediumteilstrom-Mischeinheit (50) verbunden ist.

4. Kühlsystem nach einem der vorhergehenden Ansprüche, **dadurch gekennzeichnet, dass** das Betriebsmediumverteilerelement (30) an seiner Eintrittsseite mit einer vom Betriebsmediumstrom (20) durchsetzbaren Vorkühleinheit (22) verbunden ist.

5. Kühlsystem nach einem der vorhergehenden Ansprüche, **dadurch gekennzeichnet, dass** es als Wärmetauschereinrichtung ausgebildet ist und die Kühleinheit (34) und gegebenenfalls die Vorkühleinheit (22) jeweils ein Wärmetauscher sind.

6. Kühlsystem nach einem der vorhergehenden Ansprüche, **dadurch gekennzeichnet, dass** die Vorkühleinheit (22) mit einem Kühlluftstrom (24) und die Kühleinheit (34) mit einem Kühlflüssigkeitsstrom (38), insbesondere einem Kühlwasserstrom, durchsetzbar ist.

7. Kühlsystem nach einem der vorhergehenden Ansprüche, **dadurch gekennzeichnet, dass** das Kühlleitungssystem (26,40) der Kühleinheit (34) und/oder der Vorkühleinheit (22) mit mindestens einer weiteren Funktionseinheit insbesondere des Brennstoffzellensystems verbunden ist.

8. Kühlsystem nach einem der vorhergehenden Ansprüche, **dadurch gekennzeichnet, dass** die Kühleinheit (34) an ihrer Austrittsseite mit der Betriebsmediumteilstrom-Mischeinheit (50) verbunden ist insbesondere unter Zwischenschaltung eines Kondensatabscheiders (44).

9. Kühlsystem nach einem der vorhergehenden Ansprüche, **dadurch gekennzeichnet, dass** das Betriebsmedium ein Reformatgas ist, das von einem Hochtemperatur-Shift (14) zu einem Niedertemperatur-Shift (16) unter Zwischenschaltung des Betriebsmedium-Kühlsystems (12) führbar ist.

10. Kühlsystem nach einem der vorhergehenden Ansprüche, **dadurch gekennzeichnet, dass** ein Regelungssystem (56) vorgesehen ist zur Steuerung des Betriebsmediumverteilerelements (30) in Abhängigkeit einer Soll-Ist-Temperaturdifferenz des gekühlten Betriebsmediumstroms (52).
